# EUROPEAN PATENT APPLICATION

(11) **EP 4 711 591 A1**
(43) Date of publication of application: **18.03.2026**
(21) Application number: 24306511.7
(22) Date of filing: 13.09.2024
(51) Int. Cl.: F01K 23/10, B01D 53/14, B63B 35/44

(54) **FLOATING ELECTRICAL ENERGY GENERATION PLANT**

(71) Applicant: Technip Energies France, 92741 Nanterre Cedex (FR)
(72) Inventor: Zuelgaray, Philippe, 92741 Nanterre Cedex (FR)
(74) Representative: Edson, Russell Gregory

(57) **Abstract**

A floating electrical energy generation plant is disclosed. The floating electrical energy generation plant can include a floatable vessel. The floating electrical energy generation plant may include onboard storage for liquefied natural gas, and a regasification unit for regasifying the liquefied natural gas to facilitate combustion in at least one gas turbine generator of an onboard power generator. The floating electrical energy generation plant can further include an onboard carbon capture system to capture carbon dioxide present in exhaust gases from the onboard power generator, liquefy, and store the liquefied natural gas in one or more onboard storage tanks. Steam from operation of the onboard power generator can be used as heat source for a regeneration column of the carbon capture system, and the coldness of the liquefied natural gas may be utilized to help liquefy the captured carbon dioxide.

## Description

### Technical Field

The present disclosure relates generally to floating electrical energy generation plant, and more particularly although not necessarily exclusively, to a self-contained natural gas-powered floating electrical energy generation plant including onboard carbon capture technology.

### Background

Various locations and situations exist for which providing electric power in a typical manner may be impractical or impossible. For example, it may be logistically difficult and costly to transport the materials required to build a land-based electric power plant on a remote island. Likewise, many islands, as well as other non-island locations, may lack enough open space to build a land-based electric power plant, or the geography of a location in need of electric power may make construction of a land-based power plant unfeasible.

### Summary

As used below, any reference to a series of examples is to be understood as a reference to each of those examples disjunctively (e.g., "Examples 1-4" is to be understood as "Examples 1, 2, 3, or 4").

Example 1 is an offshore electrical energy generation plant including a floatable vessel deployable in a body of water and having an internal volume defined by a vessel hull and a deck joined to the hull. The offshore electrical energy generation plant also includes an onboard regasification unit for converting liquefied natural gas into natural gas, and an onboard power generator configured to generate electrical energy at least by combusting converted natural gas from the regasification unit. Also included is an onboard carbon capture system for capturing carbon dioxide from exhaust gases of the onboard power generator. The carbon capture system includes a water wash column and an absorption column that are secured to the vessel hull within the internal volume and extend upwardly through the deck.

Example 2 is Example No. 1, further comprising a liquefied natural gas storage tank in fluid communication with the onboard regasification unit.

Example 3 is Example No. 2, wherein the water wash column and the absorption column are located on an opposite end of the vessel from the liquefied natural gas storage tank.

Example 4 is Example No. 2, further comprising a carbon dioxide liquefaction unit including a heat exchanger within which a flow of captured carbon dioxide is coolable by a liquefied natural gas flow from the liquefied natural gas storage tank.

Example 5 is Example No. 4, further comprising an onboard carbon dioxide storage unit having at least one liquefied carbon dioxide storage tank for storing liquefied carbon dioxide received from the carbon dioxide liquefaction unit.

Example 6 is any one of Example No. 1 to Example No. 5, further comprising at least one onboard cooling tower configured for closed-loop cooling of cooling water usable to support operation of at least the onboard power generator and the onboard carbon capture system.

Example 7 is any one of Example No. 1 to Example No. 6, wherein the onboard carbon capture system further comprises a regeneration column that is secured to the vessel hull within the internal volume and extends upwardly through the deck.

Example 8 is any one of Example No. 1 to Example No. 7, wherein the onboard power generator is a combined cycle power plant having at least one gas turbine generator for generating electrical energy through combustion of natural gas receivable from the onboard regasification unit, and at least one steam turbine generator for generating electrical energy using steam producible from waste heat of the gas turbine generator.

Example 9 is a carbon capture system for an offshore electrical energy generation plant including a floatable vessel deployable in a body of water and having an internal volume defined by a vessel hull and a deck joined to the hull. The carbon capture system includes a number of onboard components, including a water wash column positioned to receive at least a portion of exhaust gases generated by an onboard power generator and to remove carbon dioxide therefrom using water as a solvent, and an absorption column positioned to receive a dewatered and compressed gas stream from the water wash column and configured to strip carbon dioxide molecules therefrom using an absorbent. The carbon capture system also includes a regeneration column positionable to receive the absorbent from the absorption column and configured to regenerate the absorbent by removing a carbonate salt therefrom prior to returning the absorbent to the absorption column. The regeneration column is heatable by steam associated with operation of the onboard power generator. Each of the water wash column, the absorption column, and the regeneration column are secured to the vessel hull within the internal volume and extend upwardly through the deck.

Example 10 is Example No. 9, wherein the water wash column, the absorption column, and the regeneration column are located on an opposite side of the vessel from a liquefied natural gas storage tank located in the internal volume of the vessel.

Example 11 is Example No. 10, further comprising a carbon dioxide liquefaction unit including a heat exchanger within which a flow of captured carbon dioxide is coolable by a liquefied natural gas flow from the liquefied natural gas storage tank.

Example 12 is Example No. 11, further comprising an onboard carbon dioxide storage unit having at least one liquefied carbon dioxide storage tank for storing liquefied carbon dioxide received from the carbon dioxide liquefaction unit.

Example 13 is Example No. 9, wherein each of the water wash column, the absorption column, and the regeneration column is between 35 meters to 40 meters in height.

Example 14 is a method including deploying a floating electrical energy generation plant in a body of water. The floating electrical energy generation plant includes a floating vessel having an internal volume defined by a vessel hull and a deck joined to the hull. The method also includes operating an onboard regasification unit to convert liquefied natural gas into natural gas, operating an onboard power generator to generate electrical energy at least by combusting converted natural gas from the regasification unit, and operating an onboard carbon capture system to capture carbon dioxide present in exhaust gases resulting from combustion of the natural gas by the power generator. The onboard carbon capture system includes a water wash column and an absorption column that are secured to the vessel hull within the internal volume and extend upwardly through the deck.

Example 15 is Example No. 14, wherein the floating electrical energy generation plant further comprises a liquefied natural gas storage tank that supplies liquefied natural gas to the onboard regasification unit.

Example 16 is Example No. 15, wherein the water wash column and the absorption column are located on an opposite end of the vessel from the liquefied natural gas storage tank for balancing of the vessel.

Example 17 is Example No. 15, wherein the onboard carbon capture system of the floating electrical energy generation plant further comprises a carbon dioxide liquefaction unit including a heat exchanger within which a flow of captured carbon dioxide is cooled by a liquefied natural gas flow from the liquefied natural gas storage tank.

Example 18 is Example No. 17, wherein the onboard carbon capture system of the floating electrical energy generation plant further comprises an onboard carbon dioxide storage unit having at least one liquefied carbon dioxide storage tank that stores liquefied carbon dioxide produced by the carbon dioxide liquefaction unit.

Example 19 is the method of any one of Example No. 14 to Example No. 18, wherein the onboard carbon capture system of the floating electrical energy generation plant further comprises an onboard regeneration column that regenerates an absorbent used in the absorption column, and the regeneration column is secured to the vessel hull within the internal volume and extends upwardly through the deck.

Example 20 is the method of any one of Example No. 14 to Example No. 19, further comprising cooling water used at least in operation of the power generator and the carbon capture system, by circulating the water in a closed loop through at least one cooling tower onboard the vessel.

### Brief Description of the Drawings

FIG. 1 is an elevation view of a floating electrical energy generation plant according to one example configuration.
FIG. 2 is a plan view of the floating electrical energy generation plant of FIG. 1.
FIG. 3 is a plan view depicting the floating electrical energy generation plant of FIG. 1 while being resupplied with liquefied natural gas from a liquefied natural gas carrier vessel.
FIG. 4 is a process flow diagram related to liquefied natural gas onboarding and storage components of a floating electrical energy generation plant according to one example configuration.
FIG. 5 is a process flow diagram related to boil-off gas compressor and incinerator components of a floating electrical energy generation plant according to one example configuration.
FIG. 6 is a process flow diagram related to boil-off gas recondenser and pump components of a floating electrical energy generation plant according to one example configuration.
FIG. 7 is a process flow diagram related to turbine generator and other power plant components of a floating electrical energy generation plant according to one example configuration.
FIG. 8 is a process flow diagram related to carbon capture system absorption phase components of a floating electrical energy generation plant according to one example configuration.
FIG. 9 is a process flow diagram related to carbon capture system regeneration phase components of a floating electrical energy generation plant according to one example configuration.
FIG. 10 is a process flow diagram related to carbon capture system liquefaction phase components of a floating electrical energy generation plant according to one example configuration.
FIG. 11 is a process flow diagram related to additional carbon capture system liquefaction phase components of a floating electrical energy generation plant according to one example configuration.
FIG. 12 is a flowchart of a method of generating electrical energy using a floating electrical energy generation plant according to one example configuration.

### Detailed Description

Certain aspects and examples of the present disclosure relate to a self-contained floating electrical energy generation plant that may be moored, for example, at a quay or nearshore, and can generate electrical energy that can be transmitted to one or more onshore locations. The floating electrical energy generation plant can include onboard fuel storage, such as onboard liquefied natural gas storage. The floating electrical energy generation plant can include an onboard regasification unit for regasifying the liquefied natural gas. The floating electrical energy generation plant can include an onboard power generator for generating electrical energy at least in part by burning the natural gas. The floating electrical energy generation plant can include an onboard carbon capture system that includes components to remove carbon dioxide from exhaust gases produced by the onboard power generator, to liquefy the removed carbon dioxide, and to temporarily store the liquefied carbon dioxide onboard.

The floating electrical energy generation plant may include a floatable vessel having a hull that can floatably support the various operating components of the floating electrical energy generation plant in a body of water. In some examples, the floatable vessel may be a barge. Conduit components, such as a plurality of flexible hoses, may be included to transfer liquefied natural gas to the floating electrical energy generation plant and to offload stored carbon dioxide from the floating electrical energy generation plant.

The onboard power generator of the floating electrical energy generation plant may include one or more gas turbine generators each including a gas turbine that is powered by the combustion of natural gas and configured to generate electrical energy by driving an electric generator. In an example configuration, the onboard power generator may be a combined cycle power plant, which includes one or more steam turbine generators that operate in combination with the one or more gas turbine generators to generate electrical energy. In some examples, the steam turbine generators can be powered by steam generated using heat recovered from the exhaust of the gas turbine generators. In other examples, a floating electrical energy generation plant may power generators with reciprocal internal combustion gas engines (or dual fuel engines) instead of gas turbines. Such an implementation may or may not include heat recovery and steam turbine generators.

The onboard carbon capture system of the floating electrical energy generation plant may include multiple components and stages. For example, an initial carbon removal stage may be used to capture carbon dioxide present in exhaust gases produced by the gas turbine generators of the onboard power generator. In one example configuration, exhaust gases may flow through a water wash column prior to being directed to an absorption column of the onboard carbon capture system where carbon dioxide may be stripped from the exhaust gases by contacting the exhaust gases with an absorbent chemical solution. The liquid absorbent may be a liquid solvent in some examples.

After stripping of the carbon dioxide in the absorption column, a decarbonated exhaust gas stream may be released to the atmosphere and the liquid absorbent may be directed to the regeneration column where it can be heated to release carbon dioxide contained therein. The regenerated liquid solvent can then be directed back to the absorption column for reuse. The heat involved in the regeneration process performed in the regeneration column can also cause carbonate salt in the liquid solvent to react back to carbon dioxide. In an example configuration, the regeneration column may be heated by steam used to operate the steam turbine generators of a combined cycle onboard power generator.

The onboard carbon capture system may also include an onboard carbon dioxide liquefaction unit. The onboard carbon dioxide liquefaction unit is usable to liquefy the carbon dioxide released in the regeneration column. For this purpose, the onboard carbon dioxide liquefaction unit may include one or more carbon dioxide compressors for compressing the carbon dioxide, and a heat exchanger via which the temperature of the carbon dioxide can be reduced to or below a critical point. In an example configuration, heat from the carbon dioxide can be transferred to a stream of liquefied natural gas in the heat exchanger to reduce the temperature of the carbon dioxide.

The onboard carbon capture system may further include an onboard carbon dioxide storage unit. The onboard carbon dioxide storage unit may utilize, for example, multiple onboard liquefied carbon dioxide storage tanks to temporarily store liquefied carbon dioxide from the onboard carbon dioxide liquefaction unit on the floatable vessel. The onboard carbon dioxide storage unit may be associated with a cooling system to maintain the temperature of the liquefied carbon dioxide storage tanks at a point where the carbon dioxide stored therein will remain in a liquid state.

In order to cool various components of the floating electrical energy generation plant that become heated during operation, the floating electrical energy generation plant may also employ a water cooling system. In one example configuration, the water cooling system can be a closed-loop cooling system. In such an example, water is repeatedly circulated by pumps through one or more cooling towers that may extend upwardly from a deck of the floatable vessel. Circulation of the water through the cooling towers lowers the temperature of the cooling water. When a closed-loop cooling system is utilized, additional water from the body of water only needs to be added to the system to account for water loss, such as due to evaporation in the cooling towers, and normally, none of the cooling water is discharged to the body of water. An open-loop cooling system may be employed in other examples. When an open-loop cooling system is used with the floating electrical energy generation plant, water from the body of water is drawn into the open-cooling loop, circulated to or through various components to be cooled, and returned to the body of water. While use of a closed-loop cooling system is not necessarily required, the used of a closed-loop cooling system can eliminate the need to discharge heated water into the body of water.

In an example configuration, the floating electrical energy generation plant may also include various other components such as electrical energy export lines for transmitting electrical energy generated by the onboard power generator to an onshore location, vents for venting the liquefied natural gas storage area, and an incinerator for burning boil-off gas in the case of partial shutdown of the onboard regasification unit. Various buildings or other structures may also be present and may contain HVAC equipment, a control room, offices, a workshop, or other types of crew workspaces. Ballast pumps and other devices for maintaining a proper orientation of the floating electrical energy generation plant may also be present.

A floating electrical energy generation plant may, among other applications, be usable to provide electric power at a location where construction of a typical land-based power plant is not practical. For example, a floating electrical energy generation plant may be deployable to a location where it can be difficult or otherwise inefficient to provide electric power by more traditional means, such as to a small or remote island or to another non-island location that lacks the open land required to construct a practical land-based electric power plant.

Floating electrical energy generation plants according to the disclosure may be implemented as self-contained systems while still exhibiting a compact footprint and excellent floating stability. Floating electrical energy generation plant configurations may efficiently use both a below deck internal volume and above-deck space afforded by the floating vessel, and may locate and arrange system components in a manner that minimizes the required surface area of the floating vessel and helps to balance the floating vessel in the body of water. For example, in some configurations, the natural gas storage components and carbon capture components may be located on substantially opposite sides of the floating vessel to serve as countering ballast and enhance vessel stability. Further, components such as an absorption column and a water wash column of the carbon capture system, the height of which may impart instability to the floating vessel if mounted to the deck of the floating vessel, may be secured to the hull below deck and may pass through the deck. Thus, the absorption column and the water wash column can reside partially below deck in the internal volume of the floating vessel and partially above deck. This can increase stability by lowering the center of gravity of the floating vessel and may result in a reduced profile to the effects of wind.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

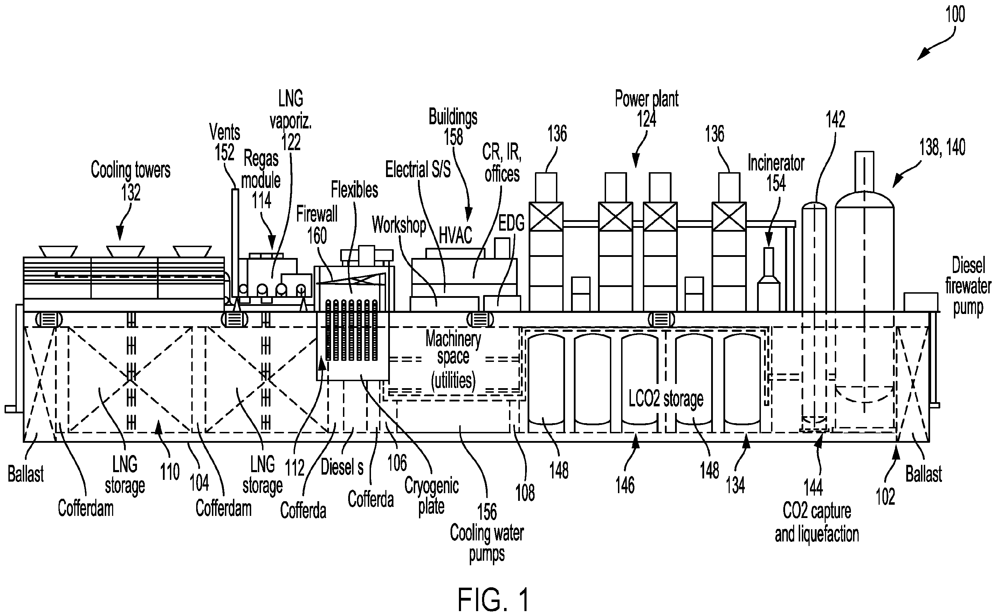

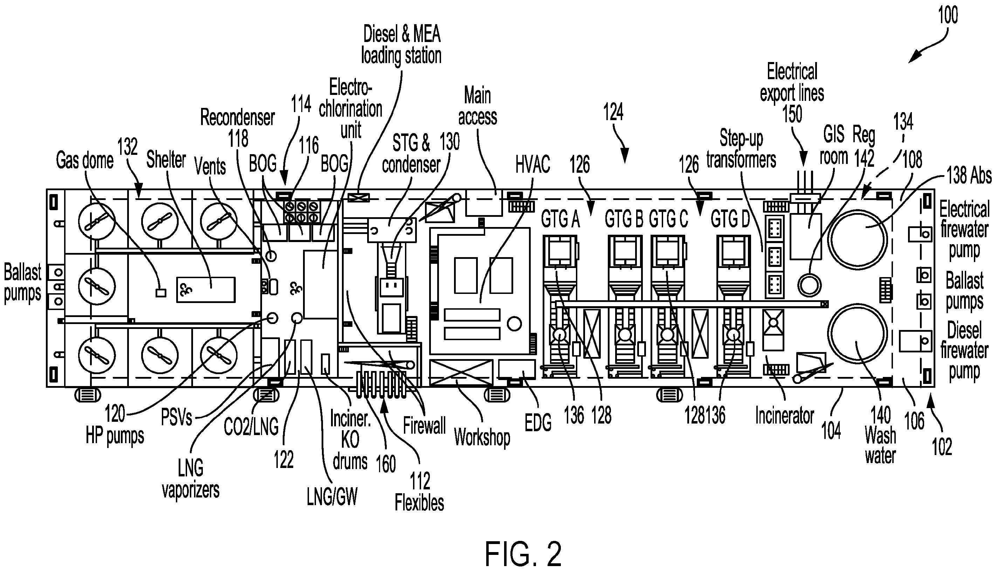

FIG. 1 is an elevation view of one example configuration of a floating electrical energy generation plant 100. FIG. 2 is a plan view of the floating electrical energy generation plant 100. The floating electrical energy generation plant 100 is a self-contained electrical energy generation plant, meaning that the floating electrical energy generation plant 100 includes onboard, a liquefied fuel supply, regasification components, electrical energy generation components, a cooling system, and a carbon capture system.

It may be observed in FIGS. 1-2, that the floating electrical energy generation plant 100 includes a floatable vessel 102 having a hull 104 and at least one deck 106 secured to the hull 104. The hull 104 can be substantially hollow, such that the floatable vessel 102 can be provided with an open internal volume 108 defined by the hull 104 and the deck 106. Various components of the floating electrical energy generation plant 100 may be located entirely or partially within the internal volume 108 of the floatable vessel 102.

The floating electrical energy generation plant 100 be moored at a quay or nearshore. In either case, mooring of the floating electrical energy generation plant 100 can be accomplished using only a minimal number of dolphins (e.g., pilings). Mooring dolphins may also be used to temporarily secure the position of a liquefied natural gas carrier vessel used to refuel the floating electrical energy generation plant 100 or a liquefied carbon dioxide carrier vessel to which liquefied captured carbon can be offloaded from the floating electrical energy generation plant 100. In some examples, a jetty or a floating walkway may be used to access the floating electrical energy generation plant 100 from shore. In other examples, boats or other vessels may be used to access the floating electrical energy generation plant 100, a liquefied natural gas carrier vessel, or a liquefied carbon dioxide vessel, and to moor the same to respective mooring dolphins, jetties or other mooring structures.

In the case of adverse environmental conditions (e.g., hurricanes or cyclones) the floating electrical energy generation plant 100 may in some cases be moved ahead of time to another location. In other examples, mooring lines or chains securing the floating electrical energy generation plant 100 to mooring dolphins, a jetty, etc., can be slackened and payed-out to allow for a shift in location of the floating electrical energy generation plant 100 to a more suitable position away from any impactable objects. The mooring lines or chains may then be re-tensioned at the displaced location of the floating electrical energy generation plant 100. A reverse order of operations may be carried out upon subsidence of the adverse environmental conditions.

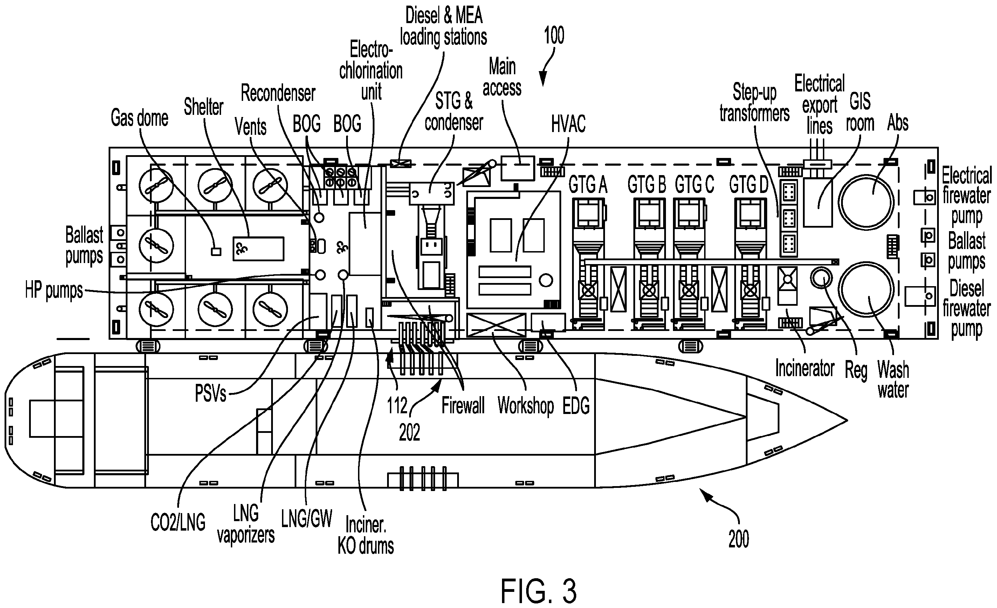

The floating electrical energy generation plant 100 can include various types of onboard components - i.e., components that are located within the internal volume defined by the hull 104, located on the deck(s) 106, or otherwise situated on the floatable vessel 102. For example, the floating electrical energy generation plant 100 may include one or more onboard liquefied natural gas (LNG) storage tanks 110. The onboard liquefied natural gas storage tanks 110 may be located entirely or substantially within the internal volume 108 of the floatable vessel 102 as shown. In other examples, it may be possible to locate the onboard liquefied natural gas storage tanks 110 above deck. The onboard liquefied natural gas storage tanks 110 are refillable, such as for example, by a liquefied natural gas carrier vessel (FIG. 3). To this end, the floating electrical energy generation plant 100 can be provided with a set of liquefied natural gas transfer conduits to temporarily connect the onboard liquefied natural gas storage tanks 110 to a source of liquefied natural gas. In this example, the set of liquefied natural gas transfer conduits is a set of flexible hoses 112. A crane may installed on the deck 106 of the floating electrical energy generation plant 100 to assist with movement of the flexible hoses 112. An automatic isolation and quick disconnect system may be associated with the flexible hoses 112 in case a problem during a loading or unloading operation requires an emergency disconnection of the flexible hoses 112.

Natural gas transported by ship is typically transported in liquefied form. Thus, when a supply of natural gas is delivered by a carrier vessel to the floating electrical energy generation plant 100, it will typically be delivered in liquefied form and stored at low temperature in the onboard liquefied natural gas storage tanks 110 to maintain its liquefied state. Electrical energy generation units (e.g., gas turbine generators), on the other hand, normally burn natural gas in its normal (gaseous) form. Therefore, the floating electrical energy generation plant 100 can include an onboard regasification unit 114 that can be used to convert liquefied natural gas from the onboard liquefied natural gas storage tanks 110 back into natural gas. In other words, the onboard regasification unit 114 can regasify the liquefied natural gas.

The onboard regasification unit 114 may include a number of different components that can work together to effectuate the regasification process. For example, the onboard regasification unit 114 may include one or more compressors to compress boil-off gas (i.e., boil-off gas compressors) 116, which is commonly generated in the onboard liquefied natural gas storage tanks 110 by vaporization of small amounts of the liquefied natural gas stored therein and must be removed to maintain proper tank pressure.

The onboard regasification unit 114 may also include at least one recondenser 118. The recondenser 118 may receive the compressed boil-off gas from the boil-off gas compressors 116 and condense the compressed boil-off gas to produce a condensate that can be added back to a liquefied natural gas flow within the floating electrical energy generation plant 100. As described in more detail below, the cold temperature of flowing liquefied natural gas emanating from the onboard liquefied natural gas storage tanks 110 may be used by the recondenser 118 in the process of condensing the boil-off gas.

One or more pumps 120 of the onboard regasification unit 114 may receive a flow of liquefied natural gas from the onboard liquefied natural gas storage tanks 110. The flow of liquefied natural gas received by the one or more pumps 120 from the onboard liquefied natural gas storage tanks 110 may also include the liquefied natural gas condensate produced by the recondenser 118. The one or more pumps 120 can pressurize the natural gas to a feed pressure required by gas turbine generators of a downstream onboard power generator 124.

The onboard regasification unit 114 can also include one or more intermediate fluid vaporizers 122. The intermediate fluid vaporizers 122 can operate to vaporize the pressurized liquefied natural gas output by the one or more pumps 120 into natural gas that can be used at least to power gas turbine generators of the onboard power generator 124. In an example, each intermediate fluid vaporizer 122 may contain several heat exchangers, and water (e.g., seawater) from the body of water in which the floating electrical energy generation plant 100 is moored may be used as a vaporization heating source.

The floating electrical energy generation plant 100 can also include the aforementioned onboard power generator 124. The onboard power generator 124 may be configured to generate electrical energy at least by combusting regasified natural gas produced by the onboard regasification unit 114. In this regard, the onboard power generator 124 may include one or more gas turbine generators 126 each of which includes a gas turbine 128 that operates by combustion of pressurized natural gas received from the one or more pumps 120 to drive a corresponding generator. The one or more gas turbine generators 126 can include one or more exhaust stacks 136 via which byproduct-containing exhaust of the natural gas combustion can be transported away from the one or more gas turbine generators 126. As described in more detail below, a carbon capture system may be in fluid communication with the one or more exhaust stacks 136 to capture carbon from the gas turbine generator exhaust streams traveling through the exhaust stacks 136.

In some examples, the onboard power generator 124 may be a combined cycle power plant. As such, and as can be best observed in FIG. 2, the onboard power generator 124 may also include one or more steam turbine generators 130. The one or more steam turbine generators 130 can each include a steam turbine that drives a generator to contribute an additional output of electrical energy from the onboard power generator 124. The one or more steam turbine generators 130 may, in some examples, operate on steam generated using heat recovered from the exhaust of the one or more gas turbine generators 126. In other examples, the onboard power generator 124 of the floating electrical energy generation plant 100 may utilize reciprocal internal combustion gas engines (or dual fuel engines) instead of gas turbines. Such an implementation may or may not include heat recovery and steam turbine generators.

When the one or more steam turbine generators 130 are employed, the steam for powering the one or more steam turbine generators 130 can be produced, for example, by using the heat recovered from the exhaust of the one or more gas turbine generators 126 to heat water in a heating vessel such as a boiler. Once the steam has been supplied to the steam turbines of the one or more steam turbine generators 130, the steam may be cooled. In some examples, an open-loop cooling process using water from a body of water in which the floating electrical energy generation plant 100 is located can be used to cool and condense the steam. In other examples, such as in the example of the floating electrical energy generation plant 100 depicted in FIGS. 1-2, a closed-loop cooling process may be used to cool and condense the steam leaving the one or more steam turbine generators 130. By utilizing closed loop cooling, returning elevated temperature water to the body of water can be avoided. In such a closed-loop cooling example, the water may cooled in one or more cooling towers 132, which may extend upwardly from the deck 106 of the floating electrical energy generation plant 100. Pumps may facilitate closed-loop circulation of the water within the closed cooling loop through the cooling towers 132, and can be used to draw additional water into the otherwise closed cooling loop when necessary to compensate for cooling water evaporation.

Each cooling tower may include external cladding skin over a frame. In one example, the cladding skin can be fiberglass-reinforced plastic (FRP) material, which is highly resistant to corrosion and weathering and can be made to provide an aesthetically pleasing exterior surface. To help ensure efficient operation of the fan of each cooling tower 132, a fan stack may be provided. The fan stack can be constructed, for example, of FRP panels, which may be ribbed for strength and bolted together on site to better ensure true concentricity. Packing may be located in each cooling tower 132. In an example, the packing may comprise corrugated plastic (e.g., PVC) sheets bonded into modules that cover the surface of the cooling tower. In operation, closed-loop cooling water can be distributed over the surface of the plastic sheets in a thin film and heat can be transferred to air passing through the tower such as by evaporation from the film surface.

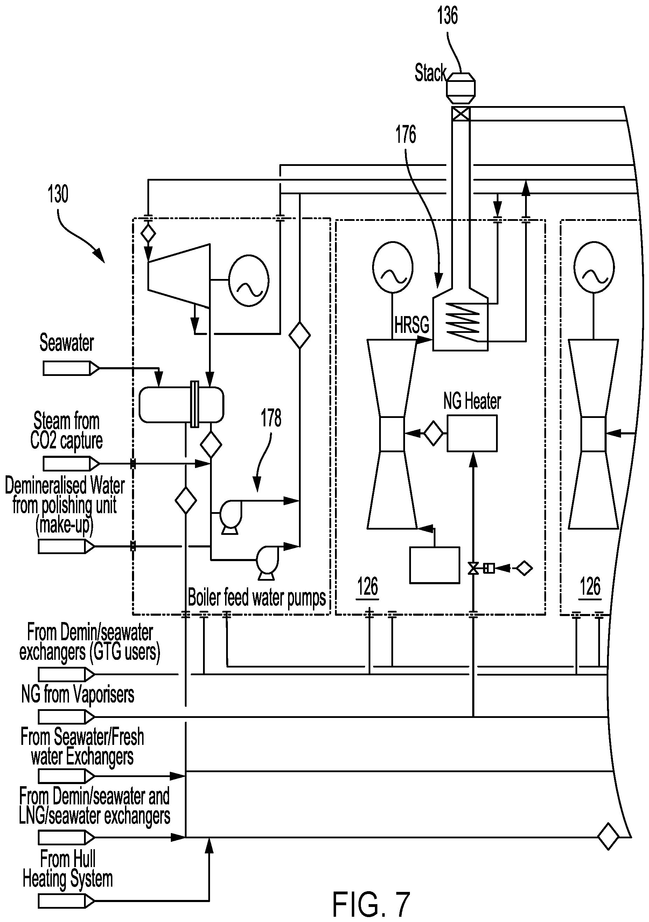

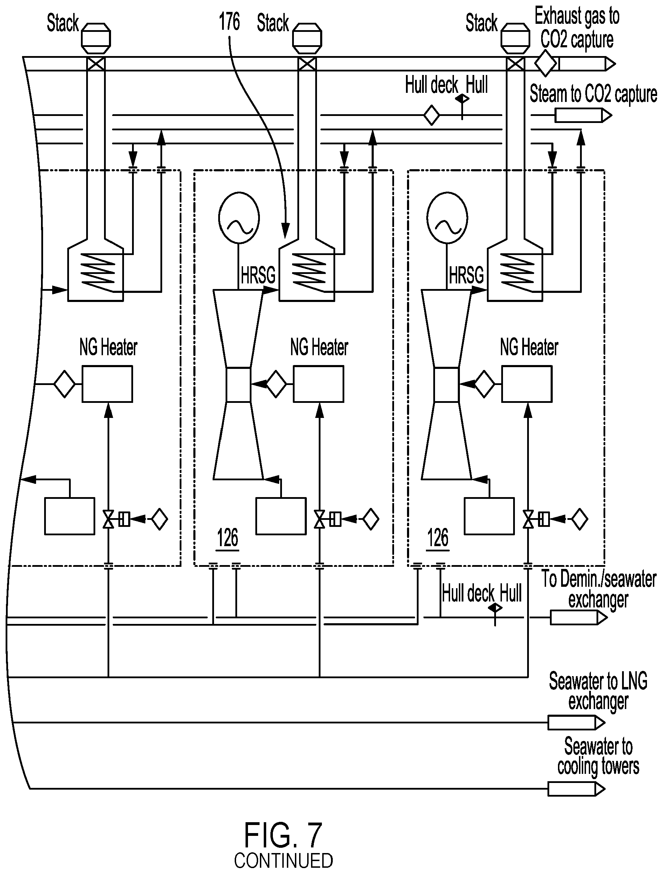

The floating electrical energy generation plant 100 can also include an onboard carbon capture system 134 to capture carbon present in exhaust gas resulting from the combustion of natural gas in the gas turbines of the gas turbine generators 126. The exhaust gas may be vented away from the gas turbine generators 126 by exhaust stacks 136. As shown, an exhaust stack 136 may be associated with each gas turbine generator 126. As may be best observed in FIG. 7, at least a portion of each exhaust gas stream passing through the exhaust stacks 136 may be directed to the onboard carbon capture system 134.

The design and construction of the onboard carbon capture system 134 may vary. As shown and described herein, examples of the onboard carbon capture system 134 can include various carbon capture components. In this particular example, the onboard carbon capture system 134 includes an absorption column 138, a water wash column 140, and a regeneration column 142. Each of these columns may be large. For example, at least the absorption column 138 and the water wash column 140 may be approximately 35-40 meters in height and of substantial diameter. In some examples, the regeneration column 142 may be of an equal or similar height. Thus, it may not be possible to adequately secure the absorption column 138, the water wash column 140, and the regeneration column 142 to the vessel 102 by affixation to the deck 106 alone. Additionally, if mounted to the deck 106, the size of the absorption column 138, the water wash column 140, and the regeneration column 142 could impart instability to the vessel 102 both by raising its center of gravity and by presenting a large surface area for impact by wind (particularly during inclement weather).

To obviate these potential issues, at least the absorption column 138 and the water wash column 140 can be mounted to the vessel hull 104 within the internal volume 108 and can extend upwardly through the deck 106. In this particular example, the regeneration column 142 is also mounted to the vessel hull 104 within the internal volume 108 and extends upwardly through the deck 106. In some other examples, the regeneration column 142 may be smaller than the absorption column 138 and the water wash column 140 and may be mounted only to the vessel deck 106. In a through-deck mounting configuration, bases (e.g., cradles) may be affixed to the hull 104 within the internal volume 108 to receive and retain a bottom of each of the absorption column 138, the water wash column 140, and the regeneration column 142. Such a mounting configuration reduces the above the deck 106 exposure of the absorption column 138, the water wash column 140, and the regeneration column 142, and also allows the columns to be secured to both the hull 104 and the deck 106.

Due to their size, the absorption column 138, the water wash column 140, and the regeneration column 142 may also add a significant amount of weight to the vessel 102. In this example of the floating electrical energy generation plant 100, the absorption column 138 and the water wash column 140 are thus located on an opposite end of the vessel 102 from the liquefied natural gas storage tanks 110, which allows for a counterbalancing of the weight of the liquefied natural gas storage tanks 110 by the weight of the absorption column 138 and the water wash column 140, and adds balance and stability to the vessel 102.

The absorption column 138 may be at least partially filled with an absorbent. In at least some examples, the absorbent is a chemical solution. For example, the absorbent may be a liquid solvent, such as an amine solvent. The selected liquid solvent will normally be a solvent for which carbon dioxide molecules have an affinity. In this manner, carbon dioxide molecules can be stripped from the exhaust gases produced by the gas turbines 128 of the gas turbine generators 126 by contacting the exhaust gases with the liquid solvent. At least when the liquid solvent is an amine solvent, the carbon dioxide will react with the amine solvent to form a carbonate salt.

The decarbonated exhaust gas stream leaving the absorption column 138 may be directed to the atmosphere. The carbonate salt-laden liquid solvent generated in the absorption column 138 may be directed to a regeneration column 142. The regeneration column 142 can utilize a thermal process to regenerate the liquid solvent by removing the carbonate salt therefrom. The regenerated liquid solvent can then be directed back to the absorption column 138 for reuse. The heat of the regeneration process performed in the regeneration column 142 causes the carbonate salt to react back to carbon dioxide. As described in more detail below, the regeneration column 142 may be heated by steam used to operate the steam turbine generators 130 of the onboard power generator 124.

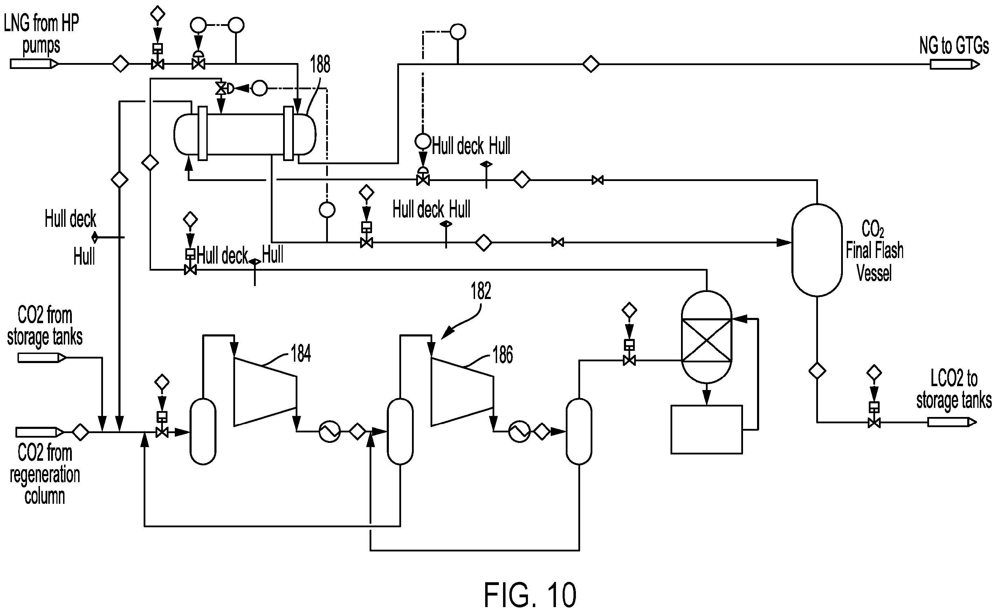

The onboard carbon capture system 134 may also include an onboard carbon dioxide liquefaction unit 144. The onboard carbon dioxide liquefaction unit 144 nay be usable to liquefy the carbon dioxide released in the regeneration column 142. The onboard carbon dioxide liquefaction unit 144 can include one or more carbon dioxide compressors 182 (FIG. 10) that may be usable to compress the carbon dioxide into a liquid for subsequent storage and offloading. Carbon dioxide must be at a critical point temperature in order to be liquefied under pressure. Consequently, the onboard carbon dioxide liquefaction unit 144 may also include a heat exchanger 188 (FIG. 10) via which the temperature of the carbon dioxide can be reduced. As described in more detail below, the heat exchanger 188 may be a CO₂/LNG heat exchanger, wherein heat from the carbon dioxide can be transferred to a stream of liquefied natural gas which circulates within the heat exchanger 188 at a much lower temperature than the carbon dioxide.

The onboard carbon capture system 134 of the floating electrical energy generation plant 100 may also include an onboard carbon dioxide storage unit 146 as part of the onboard carbon capture system 134. The onboard carbon dioxide storage unit 146 may be configured to store carbon dioxide that has been liquefied by the onboard carbon dioxide liquefaction unit 144. The components of the onboard carbon dioxide storage unit 146 may vary but in the present example of the floating electrical energy generation plant 100, the onboard carbon dioxide storage unit 146 includes several liquefied carbon dioxide storage tanks 148 for temporarily storing the liquefied carbon dioxide. In this example of the floating electrical energy generation plant 100, the liquefied carbon dioxide storage tanks 148 are located below deck in the internal volume 106 of the hull 104. The onboard carbon dioxide storage unit 146 may be associated with a cooling system to maintain the temperature of the liquefied carbon dioxide storage tanks 148 at a point where the carbon dioxide stored therein will remain in a liquid state. Alternatively, an intermediate fluid may be used to transfer heat from the carbon dioxide stored in liquefied carbon dioxide storage tanks 148 to at least some of the onboard liquefied natural gas.

The liquefied carbon dioxide may be stored in the liquefied carbon dioxide storage tanks 148 until it can be offloaded from the floating electrical energy generation plant 100. The set of flexible hoses 112 may include one or more flexible hoses designated for offloading of liquefied carbon dioxide stored in the liquefied carbon dioxide storage tanks 148. In some examples, a flexible hose 112 may be associated with each storage tank of the liquefied carbon dioxide storage tanks 148. In some examples, the liquefied carbon dioxide stored in the liquefied carbon dioxide storage tanks 148 may be offloaded by transferring the liquefied carbon dioxide to liquefied carbon dioxide carrier vessel that can transport the liquefied carbon dioxide to another location, such a location where the liquefied carbon dioxide can be transferred ashore and sequestered or otherwise used. In other examples, the onboard carbon dioxide storage unit 146 may be coupled to an onshore pipeline or another transport mechanism via which the liquefied carbon dioxide can be transported to another location.

Other types of carbon capture components may be utilized in other examples of the onboard carbon capture system 134. For example, the onboard carbon capture system 134 may employ a physical absorption process instead of a liquid absorption process. Some examples of the onboard carbon capture system 134 may be adsorption-based systems instead of absorption-based systems, or may utilize membrane capture technology or other carbon capture processes. When such other carbon capture processes are used, the components of a given onboard carbon capture system 134 may be matched to the given carbon capture process.

As may be observed in FIGS. 1-2, the floating electrical energy generation plant 100 may include various other components. For example, the floating electrical energy generation plant 100 may include electrical energy export lines 150 for transmitting electrical energy generated by the onboard power generator to 124 to an onshore location. The floating electrical energy generation plant 100 may also include one or more vents 152 for venting the location of the onboard liquefied natural gas storage tanks 110, an incinerator 154 for boil-off gas in the case of partial shutdown of the onboard regasification unit 114, and one or more cooling water pumps 156. Various buildings 158 housing HVAC equipment, a control room, offices, a workshop, etc., may also be present, as may be other crew spaces. A crane 160 may be present and may be used at least to manipulate the flexible hoses 112 during liquefied natural gas loading or liquefied carbon dioxide offloading operations. Ballast pumps may be provided to help maintain the a level orientation and above the waterline elevation of the floating electrical energy generation plant 100.

FIG. 3 depicts the floating electrical energy generation plant 100 of FIG. 1 while being resupplied with liquefied natural gas from a liquefied natural gas carrier vessel 200. As may be observed, several of the flexible hoses 112 of the floating electrical energy generation plant 100 may be connected to supply lines 202 of the liquefied natural gas carrier vessel 200 to transfer liquefied natural gas from tanks on the liquefied natural gas carrier vessel 200 to the onboard liquefied natural gas storage tanks 110 of the floating electrical energy generation plant 100. One or more pumps on the floating electrical energy generation plant 100 or on the liquefied natural gas carrier vessel 200 may be utilized during transfer of the liquefied natural gas. The crane 160 may be used to assist with the connection and disconnection of the floating electrical energy generation plant flexible hoses 112 to the supply lines 202 of the liquefied natural gas carrier vessel 200.

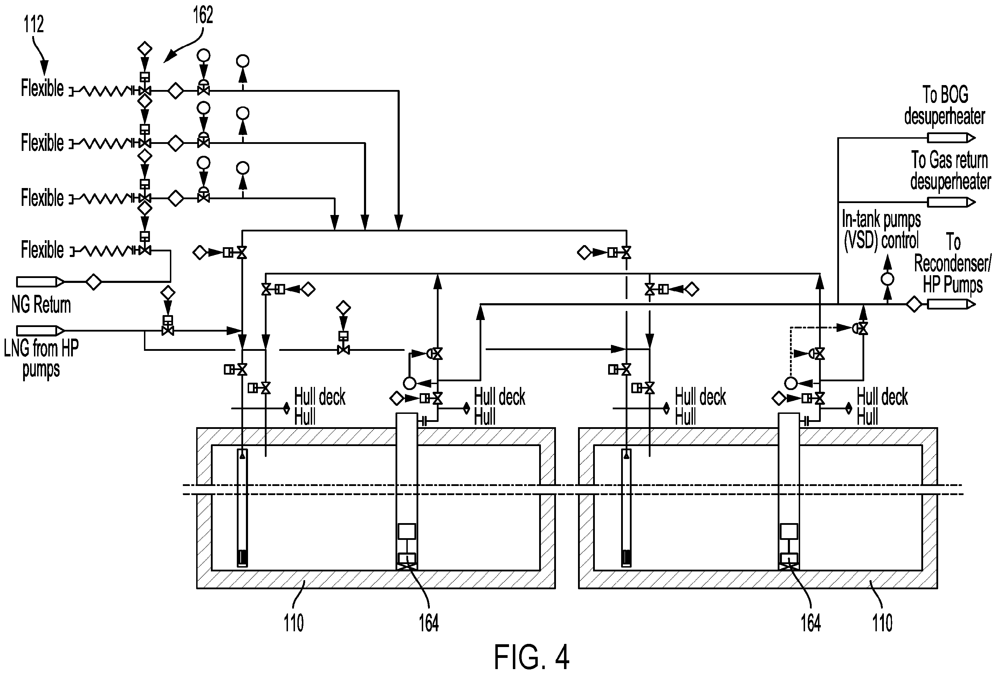

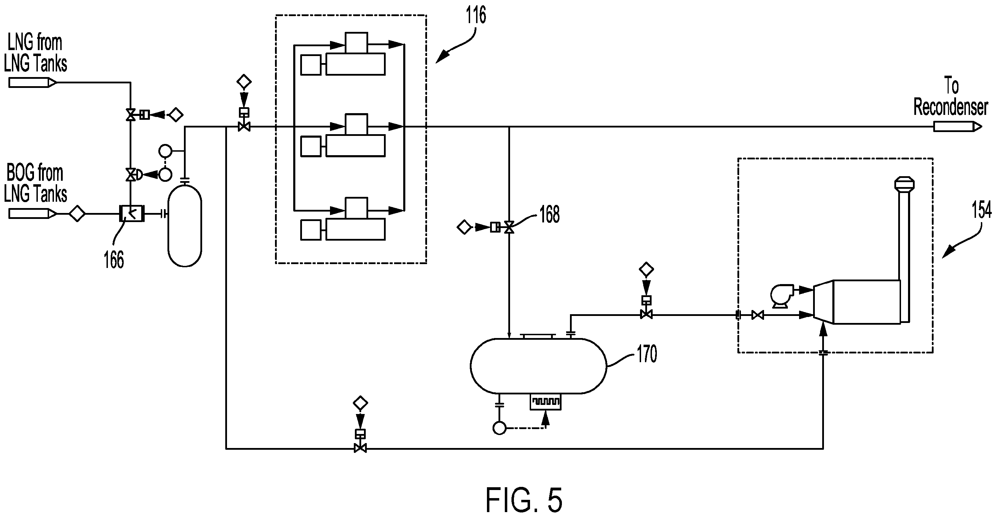

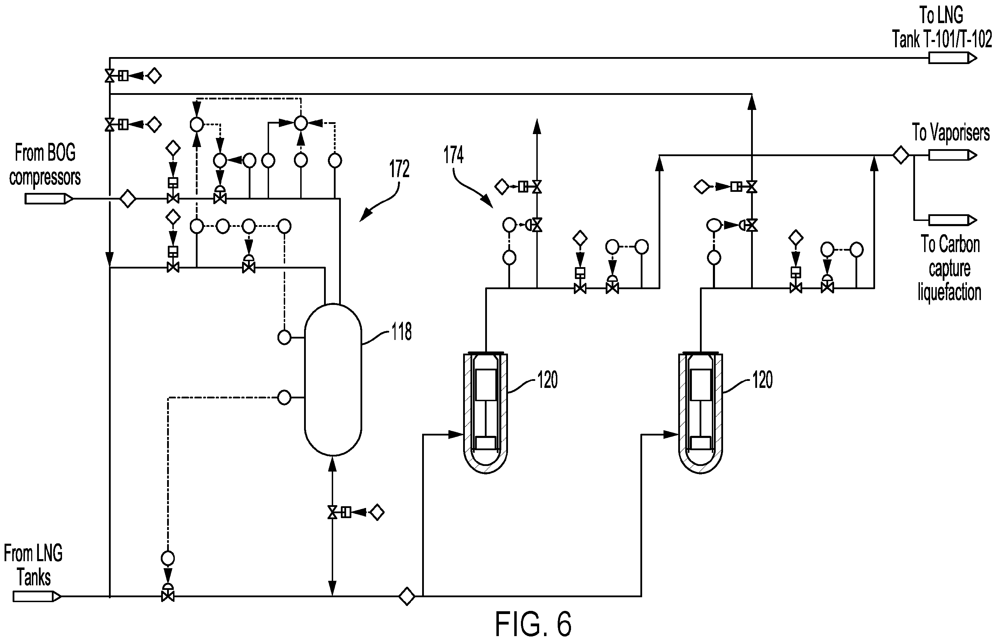

FIG. 4 is a process flow diagram related to operation of liquefied natural gas onboarding and storage components of the floating electrical energy generation plant 100 according to one example configuration. The flexible hoses 112 and associated control valves 162 of the floating electrical energy generation plant 100 are shown at the left side of FIG. 4 and represent an incoming supply of liquefied natural gas from a liquefied natural gas source, such as the liquefied natural gas carrier vessel 200 of FIG. 3. The flexible hoses 112 are in fluid communication with liquefied natural gas conduits leading to the onboard liquefied natural gas storage tanks 110. Each of the onboard liquefied natural gas storage tanks 110 may include an in-tank pump 164 for transferring liquefied natural gas under pressure to a downstream location. As indicated, the in-tank pumps 164 may transfer liquefied natural gas to various other system components such as, but not necessarily limited to, a boil-off gas desuperheater 166 (FIG. 5) and pumps 600 of the onboard regasification unit recondenser 118 (FIG. 6).

FIG. 5 is a process flow diagram illustrating a flow path of boil-off gas from the onboard liquefied natural gas storage tanks 110 to components of the onboard regasification unit 114 according to one example configuration of the floating electrical energy generation plant 100. For example, it may be observed in FIG. 5, that the boil-off gas from the onboard liquefied natural gas storage tanks 110 may flow through the boil-off gas desuperheater 166 to the one or more boil-off gas compressors 116 of the onboard regasification unit 114 to be repressurized before being transferred further downstream. As also shown in FIG. 5, the boil-off gas flow may be redirected by an associated control valve 168 to the incinerator 154 shown in FIG. 1 when necessary. For example, the boil-off gas flow may be redirected to the incinerator 154 in the case of partial shutdown of the onboard regasification unit 114. The boil-off gas may be passed through an incinerator knockout drum 170 for removal of any oil or water from the boil-off gas prior to reaching the incinerator 154.

FIG. 6 is a process flow diagram illustrating a further flow path of boil-off gas and liquefied natural gas through the floating electrical energy generation plant 100 according to one example configuration. As may be observed, the repressurized boil-off gas from the boil-off gas compressors 116 may be directed to the recondenser 118 of the onboard regasification unit 114. As previously explained, and as illustrated in FIG. 6, the recondenser 118 may condense the compressed boil-off gas received from the boil-off gas compressors 116 to produce a condensate that can be added back to the flow of liquefied natural gas from the onboard liquefied natural gas storage tanks 110. As is further shown, at least a portion of the liquefied natural gas flow can be passed through the recondenser 118 so that the low temperature of the liquefied natural gas flow can help condense the boil-off gas.

The condensed boil-off gas condensate may be reintroduced to the flow of liquefied natural gas from the onboard liquefied natural gas storage tanks 110, as shown. The flow of liquefied natural gas can then be directed to the one or more pumps 120 of the onboard regasification unit 114. The pumps 120 can pressurize the liquefied natural gas to a feed pressure required by gas turbines 128 of the gas turbine generators 126 of the downstream onboard power generator 124. Prior to being provided to the gas turbines 128 of the gas turbine generators 126 of the onboard power generator 124, the pressurized flow of liquefied natural gas expelled by the pumps 120 may be first directed to the intermediate fluid vaporizers 122, which can vaporize the pressurized liquefied natural gas into natural gas that can be used at least to power the gas turbine generators 126 of the onboard power generator 124. As shown, a portion of the pressurized liquefied natural gas may also be directed to the onboard carbon dioxide liquefaction unit 144 of the onboard carbon capture system 134. Various control valves 172, 174 or other devices may be provided to direct the boil-off gas and liquefied natural gas to and from the recondenser 118 and the pumps 120.

FIG. 7 is a process flow diagram related to operation of the gas turbine generators 126, steam turbine generators 130, and other components of the onboard power generator 124 according to an example configuration of the floating electrical energy generation plant 100. As shown, the flow of natural gas from the intermediate fluid vaporizers 122 is directed to the gas turbine 128 of each of the gas turbine generators 126. The flow of natural gas to each of the gas turbine generators 126 may pass through a natural gas heater before being fed to the gas turbines 128 thereof. Steam for powering the steam turbine generators 130 may, in this example configuration of the floating electrical energy generation plant 100, be generated using heat recovery steam generators 176 that utilize heat from the exhaust of the gas turbines 128 of the gas turbine generators 126. Water for generating steam using the heat recovery steam generators 176 may be provided by one or more boiler feed water pumps 178. It may also be observed in FIG. 7 that exhaust gases generated by combustion of natural gas in the gas turbines 128 of the gas turbine generators 126 and vented away from the gas turbine generators 126 by the exhaust stacks 136 may be directed to the onboard carbon capture system 134.

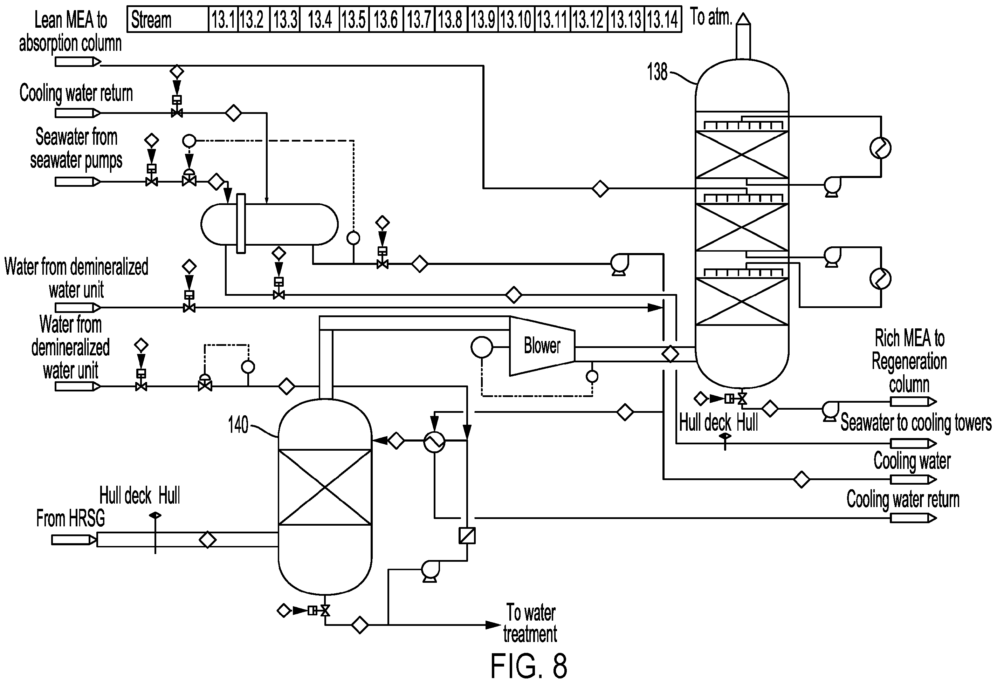

FIG. 8 is a process flow diagram related to the operation of various absorption phase components of the onboard carbon capture system 134 of the floating electrical energy generation plant 100 according to one example configuration. For example, FIG. 8 depicts the absorption column 138 and the water wash column 140 of the onboard carbon capture system 134. Carbon dioxide containing exhaust gases from the exhaust stacks 136 can initially pass through the water wash column 140 prior to being directed to the absorption column 138 where the carbon dioxide molecules in the exhaust gases can be stripped via contact with the liquid (e.g., amine) solvent. The decarbonated exhaust gas stream leaving the absorption column 138 can then be directed to the atmosphere.

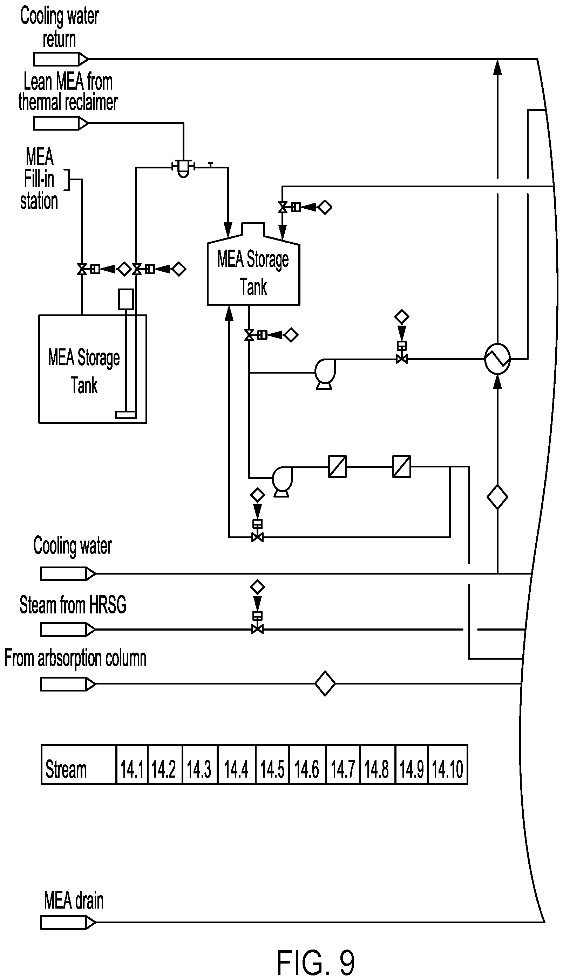

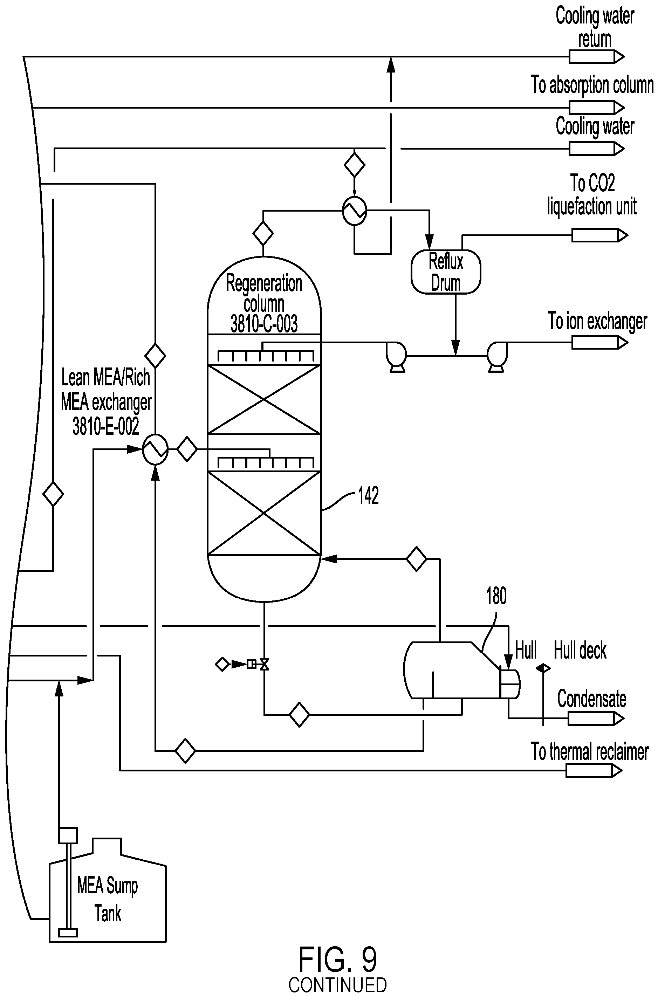

FIG. 9 is a process flow diagram related to the operation of various regeneration phase components of the onboard carbon capture system 134 of the floating electrical energy generation plant according to one example configuration. As represented, carbonate salt-laden liquid solvent from the absorption column 138 is directed to the regeneration column 142 of the onboard carbon capture system 134. The regeneration column 142 uses heat to regenerate the liquid solvent through removal of the carbonate salt therefrom. The heat of the regeneration process performed in the regeneration column 142 causes the carbonate salt to react back to carbon dioxide. Heat for reacting the carbonate salt back to carbon dioxide in the absorption column 138 can be supplied by steam redirected from the steam turbine generators 130. In this example, the steam may pass through a regeneration reboiler 180 before entering the regeneration column 142. The regenerated liquid solvent can then be directed back to the absorption column 138 for reuse, while the carbon dioxide released in the regeneration column 142 can be directed to the downstream onboard carbon dioxide liquefaction unit 144 as indicated.

FIG. 10 is a process flow diagram depicting related to the operation of various components of a carbon dioxide liquefaction unit of the onboard carbon capture system 134 of the floating electrical energy generation plant according to one example configuration. As shown, carbon dioxide released in the regeneration column 142 can be directed to one or more carbon dioxide compressors 182 for compressing the carbon dioxide as one step in the carbon dioxide liquefaction process. In this example of the onboard carbon capture system 134, the one or more carbon dioxide compressors 182 includes a first stage carbon dioxide compressor 184 and a second stage carbon dioxide compressor 186, but the compressor design and the number of compressors may vary in other examples. A suction scrubber and a discharge cooler may be associated with each compressor stage.

The compressed carbon dioxide may be directed from the carbon dioxide compressors 182 through a heat exchanger 188. In this example of the onboard carbon capture system 134, the heat exchanger 188 is a shell and tube heat exchanger, but the onboard carbon capture system 134 is not limited to use of any particular type of heat exchanger. The heat exchanger 188 may also be a CO₂/LNG heat exchanger whereby the pressurized flow of liquefied natural gas from the pumps 120 of the onboard regasification unit 114 may be circulated through the heat exchanger 188. In this manner, heat in the flow of carbon dioxide passing through the heat exchanger 188 can be transferred to the liquefied natural gas flow, which can cool the carbon dioxide to the critical temperature required for the carbon dioxide to become a liquid. The flow of natural gas that passes through the heat exchanger may continue downstream to feed the gas turbines 128 of the gas turbine generators 126. The liquefied natural gas exiting the heat exchanger 188 can be directed to the liquefied carbon dioxide storage tanks 148 of the onboard carbon capture system 134.

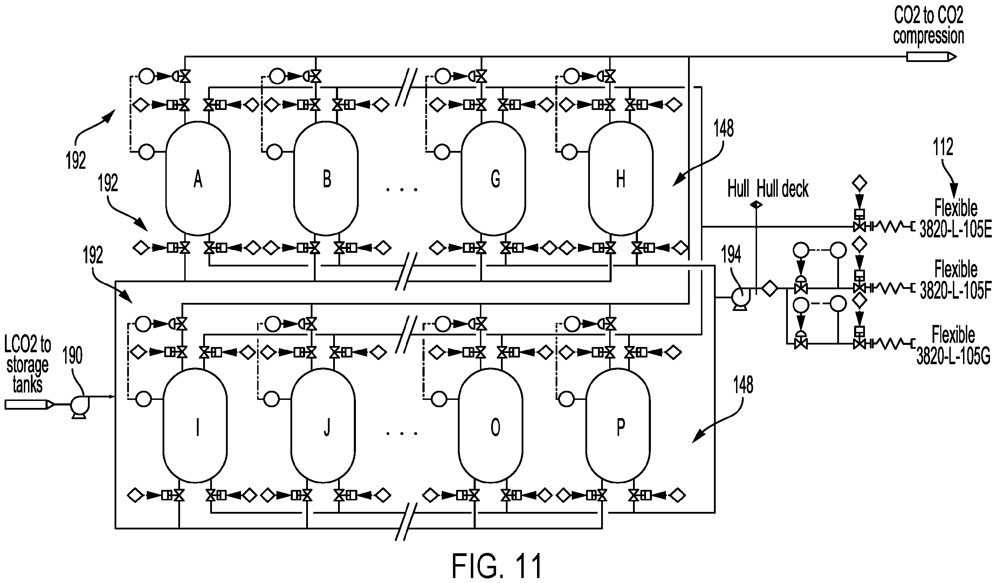

FIG. 11 is a process flow diagram related to the operation of various components of the onboard carbon dioxide storage unit 146 of the onboard carbon capture system 134 of the floating electrical energy generation plant 100 according to one example configuration. It may be observed that the onboard carbon dioxide storage unit 146 includes the previously described plurality of liquefied carbon dioxide storage tanks 148, which can receive liquefied carbon dioxide from the heat exchanger 188 and can temporarily store the liquefied carbon dioxide for subsequent offloading. A storage pump 190 may be used to help transfer the liquefied carbon dioxide into the liquefied carbon dioxide storage tanks 148. Control of the flow of liquefied carbon dioxide into the various liquefied carbon dioxide storage tanks 148 may be accomplished using various control valves 192 associated with the liquefied carbon dioxide storage tanks 148. An unloading pump 194 may be provided to offload liquefied carbon dioxide from the liquefied carbon dioxide storage tanks 148 to another vessel or to an onshore location. As shown, selected ones of the flexible hoses 112 may be used to offload the stored liquefied carbon dioxide.

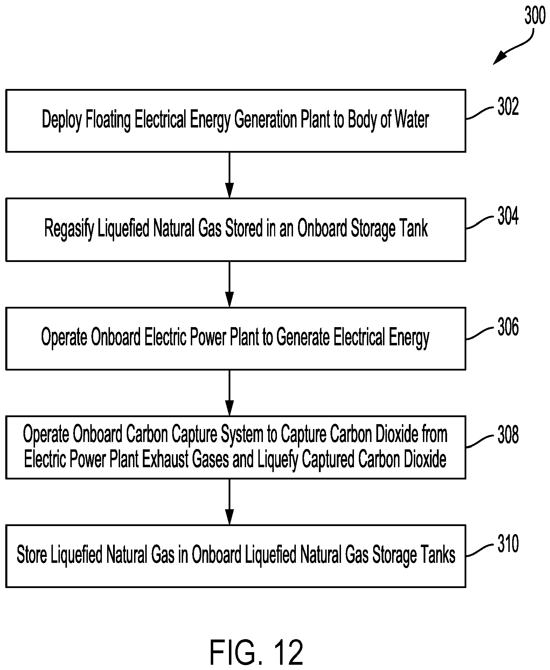

FIG. 12 is a flowchart 300 of a method of generating electrical energy using an example of a floating electrical energy generation plant, such as for example, the floating electrical energy generation plant 100 of FIGS. 1-2. As indicated in block 302, a floating electrical energy generation plant may be deployed to a body of water. The floating electrical energy generation plant may include a floatable vessel having a hull with at least some open internal volume. The body of water may be, for example, an ocean, a sea, etc.

As indicated in block 304, an onboard regasification unit may be operated to convert liquefied natural gas stored in an onboard liquefied natural gas storage tank into natural gas that can be combusted in an onboard power generator of the electrical energy generation plant. In some examples, there may be multiple liquefied natural gas storage tanks. Liquefied natural gas may be supplied to the liquefied natural gas storage tanks from, for example, a liquified natural gas carrier vessel. In some examples, the regasification unit can include one or more compressors to compress boil-off gas, at least one recondenser to receive compressed boil-off gas from the boil-off gas compressors and to condense the compressed boil-off for adding back to a liquefied natural gas flow. The recondenser may use the coldness of liquefied natural gas flowing from the onboard liquefied natural gas storage tanks in the process of condensing the boil-off gas. The regasification unit may also include one or more pumps 120 to pressurize the natural gas.

As indicated in block 306, an onboard power generator can be operated to generate electrical energy at least by combusting natural gas received from the onboard regasification unit. For example, the onboard power generator may include on or more gas turbine generators. In some examples, the onboard power generator may also include one or more steam turbine generators.

As indicated in block 308, an onboard carbon capture system can be operated to capture carbon dioxide present in exhaust gases resulting from combustion of the natural gas by the onboard power generator. Operating the onboard carbon capture system can include regenerating a carbon dioxide liquid absorbent from an absorption column in a regeneration column that is heated by steam generated during operation of the onboard power generator. Operating the onboard carbon capture system can also include converting the carbon dioxide to liquefied carbon dioxide by compressing the carbon dioxide and cooling the carbon dioxide in a heat exchanger by circulating liquefied natural gas from the onboard liquefied natural gas storage tank through the heat exchanger. As indicated at block 310, operating the onboard carbon capture system can further include storing the liquefied natural gas in one or more liquefied natural gas storage tanks.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. An offshore electrical energy generation plant comprising:
a floatable vessel deployable in a body of water and having an internal volume defined by a vessel hull and a deck joined to the hull;
an onboard regasification unit for converting liquefied natural gas into natural gas;
an onboard power generator configured to generate electrical energy at least by combusting converted natural gas from the regasification unit; and
an onboard carbon capture system for capturing carbon dioxide from exhaust gases of the onboard power generator, the carbon capture system including a water wash column and an absorption column that are secured to the vessel hull within the internal volume and extend upwardly through the deck.

2. The offshore electrical energy generation plant of claim 1, further comprising a liquefied natural gas storage tank in fluid communication with the onboard regasification unit.

3. The offshore electrical energy generation plant of claim 2, wherein the water wash column and the absorption column are located on an opposite end of the vessel from the liquefied natural gas storage tank.

4. The offshore electrical energy generation plant of claim 2, further comprising a carbon dioxide liquefaction unit including a heat exchanger within which a flow of captured carbon dioxide is coolable by a liquefied natural gas flow from the liquefied natural gas storage tank; optionally, further comprising an onboard carbon dioxide storage unit having at least one liquefied carbon dioxide storage tank for storing liquefied carbon dioxide received from the carbon dioxide liquefaction unit.

5. The offshore electrical energy generation plant of claim 1, further comprising at least one onboard cooling tower configured for closed-loop cooling of cooling water usable to support operation of at least the onboard power generator and the onboard carbon capture system.

6. The offshore electrical energy generation plant of claim 1, wherein the onboard carbon capture system further comprises a regeneration column that is secured to the vessel hull within the internal volume and extends upwardly through the deck.

7. The offshore electrical energy generation plant of claim 1, wherein the onboard power generator is a combined cycle power plant having at least one gas turbine generator for generating electrical energy through combustion of natural gas receivable from the onboard regasification unit, and at least one steam turbine generator for generating electrical energy using steam producible from waste heat of the gas turbine generator.

8. A carbon capture system for an offshore electrical energy generation plant including a floatable vessel deployable in a body of water and having an internal volume defined by a vessel hull and a deck joined to the hull, the carbon capture system comprising, onboard the floatable vessel:
a water wash column positioned to receive at least a portion of exhaust gases generated by an onboard power generator and to remove carbon dioxide therefrom using water as a solvent;
an absorption column positioned to receive a dewatered and compressed gas stream from the water wash column and configured to strip carbon dioxide molecules therefrom using an absorbent; and
a regeneration column positionable to receive the absorbent from the absorption column and configured to regenerate the absorbent by removing a carbonate salt therefrom prior to returning the absorbent to the absorption column, the regeneration column heatable by steam associated with operation of the onboard power generator; and
wherein each of the water wash column, the absorption column, and the regeneration column are secured to the vessel hull within the internal volume and extend upwardly through the deck; optionally, wherein the water wash column, the absorption column, and the regeneration column are located on an opposite side of the vessel from a liquefied natural gas storage tank located in the internal volume of the vessel; optionally further comprising a carbon dioxide liquefaction unit including a heat exchanger within which a flow of captured carbon dioxide is coolable by a liquefied natural gas flow from the liquefied natural gas storage tank; further optionally comprising an onboard carbon dioxide storage unit having at least one liquefied carbon dioxide storage tank for storing liquefied carbon dioxide received from the carbon dioxide liquefaction unit.

9. The carbon capture system of claim 8, wherein each of the water wash column, the absorption column, and the regeneration column is between 35 meters to 40 meters in height.

10. A method comprising:
deploying a floating electrical energy generation plant in a body of water, the floating electrical energy generation plant including a floating vessel having an internal volume defined by a vessel hull and a deck joined to the hull;
operating an onboard regasification unit to convert liquefied natural gas into natural gas;
operating an onboard power generator to generate electrical energy at least by combusting converted natural gas from the regasification unit; and
operating an onboard carbon capture system to capture carbon dioxide present in exhaust gases resulting from combustion of the natural gas by the power generator, wherein the onboard carbon capture system includes a water wash column and an absorption column that are secured to the vessel hull within the internal volume and extend upwardly through the deck.

11. The method of claim 10, wherein the floating electrical energy generation plant further comprises a liquefied natural gas storage tank that supplies liquefied natural gas to the onboard regasification unit.

12. The method of claim 11, wherein the water wash column and the absorption column are located on an opposite end of the vessel from the liquefied natural gas storage tank for balancing of the vessel.

13. The method of claim 11, wherein the onboard carbon capture system of the floating electrical energy generation plant further comprises a carbon dioxide liquefaction unit including a heat exchanger within which a flow of captured carbon dioxide is cooled by a liquefied natural gas flow from the liquefied natural gas storage tank; optionally, wherein the onboard carbon capture system of the floating electrical energy generation plant further comprises an onboard carbon dioxide storage unit having at least one liquefied carbon dioxide storage tank that stores liquefied carbon dioxide produced by the carbon dioxide liquefaction unit.

14. The method of claim 10, wherein the onboard carbon capture system of the floating electrical energy generation plant further comprises an onboard regeneration column that regenerates an absorbent used in the absorption column, and the regeneration column is secured to the vessel hull within the internal volume and extends upwardly through the deck.

15. The method of claim 10, further comprising cooling water used at least in operation of the power generator and the carbon capture system, by circulating the water in a closed loop through at least one cooling tower onboard the vessel.
